(19) Europäisches Patentamt
European Patent Office
Office européen des brevets

(11) Veröffentlichungsnummer: **0 142 024**
**B1**

(12) # EUROPÄISCHE PATENTSCHRIFT

(45) Veröffentlichungstag der Patentschrift: **01.04.87**

(51) Int. Cl.[4]: **C 08 G 75/02**

(21) Anmeldenummer: **84112105.6**

(22) Anmeldetag: **10.10.84**

(54) **Verfahren zur Herstellung von hochmolekularen, gegebenenfalls verzweigten Polyarylensulfiden.**

(30) Priorität: **22.10.83 DE 3338501**

(43) Veröffentlichungstag der Anmeldung: **22.05.85 Patentblatt 85/21**

(45) Bekanntmachung des Hinweises auf die Patenterteilung: **01.04.87 Patentblatt 87/14**

(84) Benannte Vertragsstaaten: **DE FR GB IT**

(56) Entgegenhaltungen:
**EP - A - 0 073 526**
**EP - A - 0 109 637**

(73) Patentinhaber: **BAYER AG, Konzernverwaltung RP Patentabteilung, D-5090 Leverkusen 1 Bayerwerk (DE)**

(72) Erfinder: **Ostlinning, Edgar, Dr., Rembrandtstrasse 37, D-4000 Düsseldorf (DE)**
Erfinder: **Idel, Karsten, Dr., Scheiblerstrasse 81, D-4150 Krefeld (DE)**

**EP 0 142 024 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der Erfindung ist ein Verfahren zur Herstellung von hochmolekularen, gegebenenfalls verzweigten Polyarylensulfiden. Diese können in polaren organischen Lösungsmitteln in Abwesenheit von Wasser hergestellt werden, wobei wasserhaltige Stoffe vor der Reaktion im Umsatzgemisch entwässert werden.

Polyarylensulfide und ihre Herstellung sind bekannt (siehe beispielsweise US-PS 2 513 188, 3 117 620, 3 354 835, 3 790 536, 3 839 301, 4 038 259, 4 038 260, 4 038 261, 4 038 262, 4 056 515, 4 060 520, 4 064 114, 4 282 347, DE-AS 2 453 485, 2 553 749, 2 623 333, 2 623 363, DE-OS 2 930 797, 2 930 710, 3 019 732, 3 030 488).

All diese Verfahren setzen Ausgangsstoffe ein, die vor der Umsetzung der Halogenaromaten in einem separaten Schritt zumindest teilweise entwässert werden müssen.

So werden z.B. im Verfahren der DE-OS 3 030 488 Alkalisulfide eingesetzt, die vor der Umsetzung zu Polyarylensulfiden in einem separaten Schritt teilweise entwässert werden müssen. Die Alkalisulfid-Hydrate werden dabei auf einen Wassergehalt von 1 bis 2,4 Mol Wasser pro Mol Alkalisulfid gebracht. Gemäss den US-PS 4 056 515 und 4 060 520 verbleiben in den Reaktionsgemischen nach der Vorentwässerung Wassergehalte von 1 Mol und mehr pro Mol S-Spender. In der US-PS 4 238 347 wird nach dem Entwässerungsschritt Wasser zum Reaktionsgemisch gegeben, um einen bestimmten Wassergehalt zu erreichen.

Als besonders vorteilhaft wird es bei all diesen Verfahren angesehen, dass bei der Entwässerung nicht alle Reaktionspartner anwesend sind. Insbesondere werden die Halogenaromaten mit Teilen des Lösungsmittels erst nach einer eigenen Vorentwässerung zugesetzt.

Demgegenüber wurde nun gefunden, dass es besonders vorteilhaft ist, von Anfang an alle Umsetzungskomponenten wasserfrei vorzulegen und auf mindestens 150°C aufzuheizen. Dann werden wasserhaltige Einsatzstoffe in Form ihrer Lösung, Schmelze oder als Feststoff so zudosiert, dass eingebrachtes Wasser kontinuierlich, beispielsweise azeotrop, abdestilliert werden kann. Dadurch kann erreicht werden, dass das Umsetzungsgemisch wasserfrei ist. Anschliessend wird auf die Umsetzungstemperatur aufgeheizt.

Gegenstand der Erfindung ist daher ein Verfahren zur Herstellung von gegebenenfalls verzweigten Polyarylensulfiden aus

a) 50 - 100 Mol-% Dihalogenaromaten der Formel

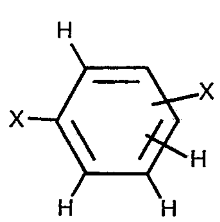

(I),

und 0 - 50 Mol-% Dihalogenaromaten der Formel

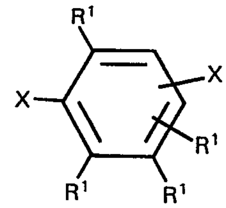

(II),

in denen

X für zueinander meta- oder para-ständiges Halogen wie Chlor oder Brom steht und

$R^1$ gleich oder verschieden ist und Wasserstoff, Alkyl, Cycloalkyl, Aryl, Alkylaryl, Arylalkyl sein kann, wobei zwei zueinander orthoständige Reste $R^1$ zu einem aromatischen oder heterocyclischen Ring verknüpft sein können und mindestens ein Rest $R^1$ verschieden von Wasserstoff ist und

b) 0 bis 5 Mol-%, bevorzugt 0,1 bis 2,5 Mol-%, bezogen auf die Summe der Dihalogenaromaten der Formel I und II, eines Tri- oder Tetrahalogenaromaten der Formel

$$ArX_n \qquad (III),$$

wobei

Ar ein aromatischer oder heterocyclischer Rest ist,
X für Halogen wie Chlor oder Brom und
n für die Zahl 3 oder 4 steht und

c) Alkalisulfiden, bevorzugt Natrium- oder Kaliumsulfid oder deren Mischung, bevorzugt in Form ihrer Hydrate oder wässrigen Mischungen, gegebenenfalls zusammen mit Alkalihydroxiden wie Natrium- und Kaliumhydroxid, wobei das molare Verhältnis von (a + b) : c im Bereich von 0,85 : 1 bis 1,15 zu 1, vorzugsweise 0,95 : 1 bis 1,05 : 1, liegt in

d) einem organischen Lösungsmittel, gegebenenfalls unter Mitverwendung von Katalysatoren und/oder weiteren Cosolventien, wobei das molare Verhältnis von Alkalisulfiden c) zu dem organischen Lösungsmittel d) im Bereich von 1 : 2 bis 1 : 15 liegt, dadurch gekennzeichnet, dass alle wasserfreien Einsatzstoffe vorgelegt und auf mindestens 150°C, bevorzugt 165°C bis 205°C, erwärmt werden und wasserhaltige Stoffe in Form einer Lösung oder Schmelze oder als Feststoff so eingetragen werden, dass eingebrachte Wasser aus dem Reaktionsgemisch destillativ abgetrennt wird, und die Reaktion anschliessend bei Temperaturen von 210°C bis 270°C, bevorzugt 215°C bis 250°C, gegebenenfalls unter leichtem Überdruck durchgeführt wird.

Als Katalysatoren können für diesen Zweck bekannte Substanzen in üblichen Mengen eingesetzt werden, beispielsweise Alkalifluoride, Alkaliphosphate und Alkalicarboxylate. Es werden pro Mol Alkalisulfid 0,02 bis 1,0 Mol Katalysator eingesetzt.

Als Cosolventien können beispielsweise N,N-Dialkylcarbonsäureamide von $C_1$-$C_8$-aliphatischen und $C_6$-$C_{12}$-aromatischen Carbonsäuren in einer Menge von 0,02 bis 1,0 Mol, bezogen auf 1 Mol Alkalisulfid, eingesetzt werden.

$R^1$ steht in Formel (II) vorzugsweise für Wasserstoff, $C_1$-$C_{20}$-Alkyl, $C_5$-$C_{20}$-Cycloalkyl, $C_6$-$C_{24}$-Aryl, $C_7$-$C_{24}$-Alkylaryl oder $C_7$-$C_{24}$-Aralkyl. Weiterhin kön-

nen zwei zueinander ortho-ständige Reste $R^1$ einen ankondensierten aromatischen Ring mit insgesamt 6 C-Atomen oder einen ankondensierten heterocyclischen aromatischen Ring mit 5 bis 6 Ringatomen und 1 bis 3 Heteroatomen wie N, O und S bilden.

Ar steht vorzugsweise für einen aromatischen Rest mit 6 bis 24 C-Atomen oder heterocyclischen aromatischen Rest mit 6 bis 24 Ringatomen, besonders bevorzugt für einen aromatischen Rest mit 6 bis 10 C-Atomen oder heterocyclischen Rest mit 6 bis 10 Ringatomen, wobei die heterocyclischen Reste bis zu 3 Heteroatome wie N, S, O enthalten können.

Alkalisulfide werden in üblichen Mengen und in üblicher Weise eingesetzt. Zum Beispiel sind Lithium-, Natrium-, Kalium- und Rubidiumsulfis geeignet, vorzugsweise Natrium- und Kaliumsulfid. Weiterhin können die Alkalisulfide aus Hydrogensulfiden mit Alkalihydroxiden wie LiOH, NaOH und KOH in situ erzeugt werden. Es können Mischungen sowohl der Sulfide als auch der Hydroxide eingesetzt werden.

Erfindungsgemäss können meta- und para-Dihalogenaromaten der Formel (I) bzw. (II) eingesetzt werden. In diesem Fall kann das Verhältnis meta- zu para-Dihalogenaromaten bis zu 30 : 70 betragen.

Besonders bevorzugt werden p-Dihalogenaromaten eingesetzt. Sollen verzweigte Polyarylensulfide hergestellt werden, müssen mindestens 0,05 Mol-% eines Tri- oder Tetrahalogenaromaten der Formel (III) eingesetzt werden. Vorzugsweise werden 0,05 bis 0,5 Mol-%, bezogen auf die Summe der Dihalogenaromaten, eines Tri- oder Tetrahalogenaromaten, eingesetzt.

Es können bis zu 5 Mol-% eines Polyhalogenaromaten der Formel (III) eingesetzt werden.

Beispiele für erfindungsgemäss einzusetzende Dihalogenaromaten der Formel (I) sind: p-Dichlorbenzol, p-Dibrombenzol, 1-Chlor-4-brombenzol, 1,3-Dichlorbenzol, 1,3-Dibrombenzol, 1-Chlor-3-brombenzol und 1-Chlor-4-brombenzol. Sie sind alleine oder im Gemisch miteinander verwendbar. Besonders bevorzugt sind 1,4-Dichlorbenzol und 1,4-Dibrombenzol.

Beispiele für erfindungsgemäss einzusetzende Dihalogenaromaten der Formel (II) sind: 2,5-Dichlortoluol, 2,5-Dichlorxylol, 1-Ethyl-2,5-dichlorbenzol, 1-Ethyl-2,5-dibrombenzol, 1-Ethyl-2-brom-5-chlorbenzol, 1,2,4,5-Tetramethyl-3,6-dichlorbenzol, 1-Cyclohexyl-2,5-dichlorbenzol, 1-Phenyl-2,5-dichlorbenzol, 1-Benzyl-2,5-dichlorbenzol, 1-Phenyl-2,5-dibrombenzol, 1-p-Tolyl-2,5-dichlorbenzol, 1-p-Tolyl-2,5-dibrombenzol, 1-Hexyl-2,5-dichlorbenzol, 2,4-Dichlortoluol, 2,4-Dichlorxylol, 2,4-Dibromcumol und 1-Cyclohexyl-3,5-dichlorbenzol. Sie sind allein oder im Gemisch miteinander einsetzbar.

Beispiele für erfindungsgemäss einzusetzende Tri- bzw. Tetrahalogenaromaten der Formel (III) sind: 1,2,3-Trichlorbenzol, 1,2,4-Trichlorbenzol, 1,2,4-Tribrombenzol, 1,3,5-Trichlor-2,4,6-trimethylbenzol, 1,2,3-Trichlornaphthalin, 1,2,4-Trichlornaphthalin, 1,2,6-Trichlornaphthalin, 2,3,4-Trichlortoluol, 2,3,6-Trichlortoluol, 1,2,3,4-Tetrachlornaphthalin, 1,2,4,5-Tetrachlorbenzol, 2,2',4,4'-Tetrachlorbiphenyl, 1,3,5-Trichlor-triazin, 1,3,5-Tribrom-triazin.

Erfindungsgemäss geeignete organische Lösungsmittel sind z.B. N-Alkyllactame, beispielsweise N-Methylpyrrolidon, N-Ethylpyrrolidon, N-Methylpiperidon, N-Isopropylpyrrolidon, N-Methylcaprolactam oder andere polare organische Lösungsmittel, in denen sich die Reaktionspartner zumindest teilweise lösen und deren Siedepunkt bei dem Druck, bei dem die Umsetzung ausgeführt wird, über 200°C liegt.

Die Reaktionszeit kann bis zu 24 Stunden betragen, vorzugsweise 2 bis 18 Stunden.

Die Umsetzung wird im allgemeinen bei Atmosphärendruck durchgeführt. Eine Anwendung eines Überdruckes von 0,1 bis 8 bar kann in besonderen Fällen von Vorteil sein.

Bei der Durchführung des erfindungsgemässen Verfahrens können die wasserfreien Komponenten der Umsetzung in beliebiger Reihenfolge zusammengegeben werden. Zu dieser auf 150°c bis 205°C, bevorzugt 165°C bis 205°C erhitzten Mischung werden die wasserhaltigen Einsatzstoffe in beliebiger Reihenfolge einzeln oder im Gemisch in dem Mass so zudosiert, dass das in Form von Hydrat- und/oder Lösungswasser eingetragene Wasser durch azotrope Destillation, beispielsweise durch das abdestillierende Azeotrop mit Halogenaromaten der Formeln (I), (II) und (III) oder mit dem Lösungsmittel oder zusätzlichem Schleppmittel aus der Mischung entfernt und abgetrennt werden kann. Zur Einhaltung der Stöchiometrie der Umsetzung wird der Halogenaromat nach Abtrennung des mitgeschleppten Wassers in das Umsetzungsgemisch zurückgeführt.

Die Aufarbeitung des Umsetzungsgemisches in die Isolierung der Polyarylensulfide kann in bekanntner Weise erfolgen.

Das Polyarylensulfid kann direkt aus der Reaktionslösung oder erst z.B. nach Zugabe von Wasser und/oder verdünnten Säuren, nach üblichen Verfahrensweisen abgetrennt werden, so beispielsweise durch Filtration oder durch Zentrifugieren. Nach der Abtrennung des Polyarylensulfids schliesst sich im allgemeinen eine Wäsche mit Wasser an. Eine Wäsche oder Extraktion mit anderen Waschflüssigkeiten, die auch zusätzlich oder nachträglich zu dieser Wäsche durchgeführt werden kann, ist auch möglich.

Das Polyarylensulfid kann auch beispielsweise durch Abdestillieren des Lösungsmittels und eine anschliessende Wäsche, wie oben beschrieben, gewonnen werden.

Die erfindungsgemässen Polyarylensulfide können mit anderen Polymeren, sowie Pigmenten und Füllstoffen, beispielsweise Graphit, Metallpulver, Glaspulver, Quarzmehl oder Glasfasern gemischt oder mit den für die Polyarylensulfide üblichen Additiven, beispielsweise üblichen Stabilisatoren oder Entformungsmitteln, versetzt werden.

Im allgemeinen wird das Schmelzfliessverfahren von Polyarylensulfiden nach ASTM 1238-70 bei 316°C unter Verwendung eines 5-kg-Gewichtes gemessen und in g/10 Minuten angegeben.

Bei hohen Schmelzflusswerten kann diese Messung jedoch aufgrund der hohen Ausflussrate der Polymerschmelze Schwierigkeiten bereiten.

Die Schmelzviskosität $\tau$ m der Polymerschmelze (in Pa.s) bei 306°C wurde in Abhängigkeit von der

Schubspannung $\tau$ (in Pa.s) mit Hilfe des Instron-Rotationsviskosimeters bestimmt.

Man kann auf diese Weise die Schmelzviskosität in einem sehr weiten Bereich von $10^{-1}$ bis $10^7$ Pa.s bestimmen. In dem Instron-Rheometer wird das Polymer zwischen einer festen Platte und einem drehbaren Kegel geschmolzen und das Drehmoment des Kegels bestimmt. Aus Drehmoment, Winkelgeschwindigkeit und apparativen Daten kann die Schmelzviskosität in Abhängigkeit von der Schubspannung errechnet werden. Verwendet wurde das Rheometer Modell 3250 der Fa. Instron (Durchmesser des Kegels und der Platte 2 cm).

Angegeben wird die Schmelzviskosität, die bei einer Schubspannung von $\tau = 10^2$ Pa gemessen wurde.

Die erfindungsgemässen Polyarylensulfide besitzen nach der Isolierung aus dem Reaktionsgemisch im allgemeinen Schmelzviskositäten von $0,1 \times 10^2$ bis $5 \times 10^6$ Pa.s, vorzugsweise von $0,2 \times 10^3$ bis $10^4$ Pa.s. Sie haben gute farbliche Eigenschaften und können durch Extrusion, Extrusionsblasen, Spritzgiessen oder sonst übliche Verarbeitungstechniken zu Folien, Formkörpern oder Fasern verarbeitet werden. Diese können in üblicher Weise Verwendung finden, z.B. als Automobilteile, Armaturen, Elektroteile, z.B. Schalter, elektronische Tafeln, chemikalienresistente und verwitterungsstabile Teile und Apparate wie Pumpengehäuse und Pumpenflügelräder, Ätzbäder, Dichtungsringe, Teile von Büromaschinen, Ventile, Kugellagerteile.

*Vergleichsbeispiel 1*

Herstellung von Polyphenylensulfid gemäss US-PS 3 354 119

In einem mit Rührer ausgerüsteten Autoklaven wurden 129 g Natriumsulfidtrihydrat (≙ 1 Mol $Na_2S$) und 300 g N-Methylpyrrolidon zusammengegeben. Das Gemisch wurde mit Stickstoff gespült und langsam bis auf 202°C erwärmt. Dabei destillierten insgesamt 10 ml Wasser ab (daraus errechnet sich der Restwassergehalt von 1,78 Mol bezogen auf Natriumsulfid in der Reaktionslösung). Der Ansatz wurde anschliessend auf ca. 160°C abgekühlt und 147 g p-Dichlorbenzol (≙ 1 Mol) in ca. 50 g Methylpyrrolidon hinzugefügt. Man erwärmt das Reaktionsgemisch unter einem Stickstoffvordruck von 2,5 bar in 30 Minuten auf 245°C und hält diese Temperatur 3 Stunden. Dabei wird ein Enddruck von 14,5 bar erreicht. Nach Abkühlen auf Raumtemperatur wird ein grauer Feststoff isoliert, der anschliessend mit Wasser gewaschen wird. Man trocknet bei 80°C im Vakuum und erhält 100,3 g (= 93%) Poly-p-phenylensulfid mit hellbrauner Farbe und folgenden Kenndaten: Schmelzviskosität $\eta m = 4,5$ Pa.s (bei $\tau = 10^2$ Pa).

Eine thermoplastische Verarbeitung ist ohne Härtung nicht möglich.

*Vergleichsbeispiel 2*

Wie Vergleichsbeispiel 1, jedoch wurde zusätzlich zu p-Dichlorbenzol 1,81 g 1,2,4-Trichlorbenzol (≙ 1 Mol-% bezogen auf Dichlorbenzol) eingesetzt und die Reaktion unter Normaldruck durchgeführt. 48,9 g hellgraues Produkt (≙ 45,3% der Ausbeute bezogen auf $Na_2S$) mit einer Schmelzviskosität von $\eta m < 1$ Pa.s (bei $\tau = 10^2$ Pa) wurden isoliert.

*Beispiel 1*

In einem 2-l-Dreihalskolben, der mit Thermometer, Rührer, kühlbarer Kolonne, Destillatteiler und Rückflusskühler ausgerüstet ist, werden unter Stickstoff 1110 g N-Methylcaprolactam, 30,3 g N,N-Dimethylacetamid, 341,1 g 1,4-Dichlorbenzol (≙ 2,32 Mol) und 4,21 g 1,2,4-Trichlorbenzol (1 Mol-% bezogen auf 1,4-Dichlorbenzol) vorgelegt und auf 190°C bis 200°C erwärmt. Dazu wird eine Lösung von 180,9 g Natriumsulfidhydrat (≙ 2,32 Mol S-Spender) und Natriumhydroxid in insgesamt 250 ml Wasser (einschliesslich Hydratwasser) so zugetropft, dass das zugeführte Wasser nahezu gleichzeitig azeotrop mit 1,4-Dichlorbenzol abdestillieren kann. Zur Erhaltung der Stöchiometrie wird abdestillierendes 1,4-Dichlorbenzol nach Abtrennung des Wassers wieder in den Ansatz zurückgeführt. Nach beendeter Zugabe und beendeter Entwässerung wird die Kolonne auf Kühlung gestellt, der Ansatz 10 Stunden zum Rückfluss erhitzt und das Produkt anschliessend in üblicher Weise isoliert. Man erhält 237,5 g farbloses Polyarylensulfid [94,8% Ausbeute bezogen auf 1,4-Di chlorbenzol), Schmelzviskosität $\eta_m = 74 \times 10^3$ Pa.s (bei $\tau = 10^2$ Pa)].

*Beispiel 2*

Wie Beispiel 1, jedoch mit 2,73 g 1,2,4-Trichlorbenzol (0,65 Mol-% bezogen auf 1,4-Dichlorbenzol). Man erhält 225,9 g weisses Polyarylensulfid [90,2% Ausbeute bezogen auf 1,4-Dichlorbenzol, Schmelzviskosität $\eta_m = 1,2 \times 10^2$ Pa.s (bei $\tau = 10^2$ Pa)].

*Beispiel 3*

Wie Beispiel 1, jedoch mit 1,68 g 1,2,4-Trichlorbenzol (0,4 Mol-% bezogen auf 1,4-Dichlorbenzol) 232,7 g weisses Polyarylensulfid [92,9% Ausbeute bezogen auf 1,4-Dichlorbenzol, Schmelzviskosität $\eta_m = 490$ Pa.s (bei $\tau = 10^2$ Pa)] werden isoliert.

*Beispiel 4*

Wie Beispiel 1, jedoch ohne N,N-Dimethylacetamid. Statt dessen werden 28,5 g Natriumacetat als Katalysator zusammen mit dem Natriumsulfid zugetropft. Man erhält 236,1 g weisses Produkt [94,2% Ausbeute bezogen auf 1,4-Dichlorbenzol, Schmelzviskosität $\eta$ $5,8 \times 10^3$ Pa.s (bei $\tau = 10^2$ Pa)].

*Beispiel 5*

Wie Beispiel 4, jedoch mit 1,68 g 1,2,4-Trichlorbenzol. 232,2 g Polyarylensulfid [93,9% Ausbeute bezogen auf 1,4-Dichlorbenzol, Schmelzviskosität $\eta_m = 570$ Pa.s (bei $\tau = 10^2$ Pa)] werden isoliert.

**Patentansprüche**

1. Verfahren zur Herstellung von hochmolekularen, gegebenenfalls verzweigten Polyarylensulfiden aus

a) 50 - 100 Mol-% Dihalogenaromaten der Formel

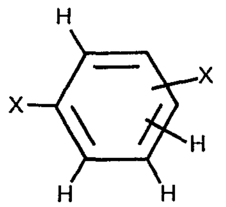

(I),

und 0 - 50 Mol-% Dihalogenaromaten der Formel

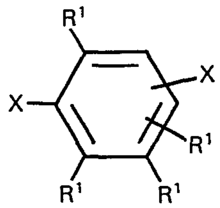

(II),

in denen

X für zueinander meta- oder para-ständiges Halogen wie Chlor oder Brom steht und

$R^1$ gleich oder verschieden ist und Wasserstoff, Alkyl, Cycloalkyl, Aryl, Alkylaryl, Arylalkyl sein kann, wobei zwei zueinander orthoständige Reste $R^1$ zu einem aromatischen oder heterocyclischen Ring verknüpft sein können und immer ein Rest $R^1$ verschieden von Wasserstoff ist und

b) 0 bis 5 Mol-%, bezogen auf die Summe der Komponenten a) und b) eines Tri- oder Tetrahalogenaromaten der Formel

$ArX_n$ (III),

wobei

Ar ein aromatischer oder heterocyclischer Rest ist,

X für Chlor oder Brom und

n für die Zahl 3 oder 4 steht und

c) Alkalisulfiden, gegebenenfalls zusammen mit Alkalihydroxiden, wobei das molare Verhältnis von (a + b) : c im Bereich von 0,85 : 1 bis 1,5 : 1 liegt und

d) einem organischen Lösungsmittel, gegebenenfalls unter Mitverwendung von Katalysatoren und/oder Cosolventien, wobei das molare Verhältnis von Alkalisulfiden c) zu dem organischen Lösungsmittel d) im Bereich von 1 : 2 bis 1 : 15 liegt, dadurch gekennzeichnet, dass alle wasserfreien Einsatzstoffe vorgelegt und auf mindestens 150°C erwärmt werden und wasserhaltige Stoffe in Form einer Lösung oder Schmelze oder als Feststoff so eingetragen werden, dass Wasser aus dem Reaktionsgemisch destillativ abgetrennt wird und die Reaktion anschliessend bei Temperaturen von 210°C bis 270°C, gegebenenfalls unter leichtem Überdruck durchgeführt wird.

2. Verfahren nach Anspruch 1, dadurch gekennzeichnet, dass bei Temperaturen von 165°C bis 205°C entwässert wird.

3. Verfahren nach Anspruch 1, dadurch gekennzeichnet, dass man N-Methyl-ω-caprolactam als polares organisches Lösungsmittel einsetzt.

4. Verfahren nach Anspruch 1, dadurch gekennzeichnet, dass Alkalicarboxylate als Katalysatoren eingesetzt werden.

5. Verfahren nach Anspruch 1, dadurch gekennzeichnet, dass N,N-Dialkylcarbonsäureamide von $C_1$-$C_8$-aliphatischen und $C_6$-$C_{12}$-aromatischen Carbonsäuren in einer Menge von 0,02 bis 1,0 Mol pro Mol Alkalisulfid, als Cosolventien eingesetzt werden.

6. Verfahren nach Anspruch 1, dadurch gekennzeichnet, dass 1,4-Dichlorbenzol als Dihalogenaromat der Formel (I) eingesetzt wird.

7. Verfahren nach Anspruch 1 zur Herstellung verzweigter Polyarylensulfide, dadurch gekennzeichnet, dass man 1,2,4-Trichlorbenzol als Polyhalogenaromat der Formel (III) einsetzt.

**Claims**

1. Process for the production of high molecular weight, optionally branched polyarylene sulphides from

a) 50 - 100 mol % of dihalogen aromatic compounds of the formula

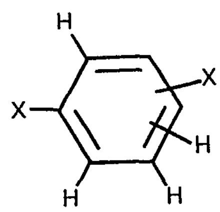

(I),

and 0 - 50 mol % of dihalogen aromatic compounds of the formula

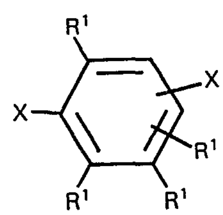

(II),

in which

X represents halogen in a meta- or para-position to one another and

$R^1$ is identical or different and can be hydrogen, alkyl, cycloalkyl, aryl, alkylaryl or arylalkyl, it being possible for two radicals $R^1$ which are in an ortho-position to each other to be linked to form an aromatic or heterocyclic ring and one radical $R^1$ is always different from hydrogen and

b) 0 to 5 mol %, based on the sum of components a) and b) of a tri- or tetrahalogen aromatic compound of the formula

$ArX_n$ (III),

wherein

Ar is an aromatic or heterocyclic radical,

X represents chlorine or bromine and

n represents the number 3 or 4 and

c) alkali metal sulphides, optionally together with alkali metal hydroxides, the molar ratio of (a + b) : c being in the range of 0.35 : 1 to 1.15 : 1 and

d) an organic solvent, optionally also using catalysts and/or cosolvents, the molar ratio of alkali metal sulphides c) to the organic solvent d) being in the

range of 1 : 2 to 1 : 15, characterised in that all the anhydrous starting materials are initially introduced and heated to at least 150°C and water-containing substances are introduced in the form of a solution or melt or in the form of solids, in such a manner that water is separated off from the reaction mixture by distillation and the reaction is then carried out at temperatures of 210°C to 270°C , optionally under a slight excess pressure.

2. Process according to Claim 1, characterised in that dehydration is carried out at temperatures of 165°C to 205°C.

3. Process according to Claim 1, characterised in that N-methyl-ω-caprolactam is used as the polar organic solvent.

4. Process according to Claim 1, characterised in that alkali metal carboxylates are used as the catalysts.

5. Process according to Claim 1, characterised in that N,N-dialkylcarboxylic acid amides of $C_1$-$C_8$-aliphatic and $C_6$-$C_{12}$-aromatic carboxylic acids are used as cosolvents in a quantity of 0.02 to 1.0 mol per mol of alkali metall sulphide.

6. Process according to Claim 1, characterised in that 1,4-dichlorobenzene is used as the dihalogen aromatic compound of the formula (I).

7. Process according to Claim 1 for the production of branched polyarylene sulphides, characterised in that 1,2,4-trichlorobenzene is used as the polyhalogen aromatic compound of the formula (III).

## Revendications

1. Procédé de production de polysulfures d'arylène de haut poids moléculaire, éventuellement ramifiés, à partir

a) de 50 à 100 moles % d'hydrocarbures aromatiques dihalogénés de formule

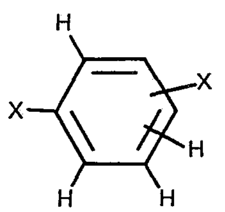

(I),

et de 0 à 50 moles % d'hydrocarbures aromatiques dihalogénés de formule

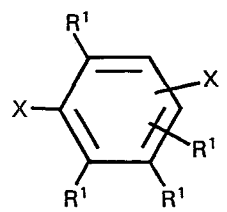

(II),

formules dans lesquelles

X représente des atomes d'halogène en position méta ou para l'un par rapport à l'autre, et

$R^1$ a des valeurs égales ou différentes et peut représenter l'hydrogène, un groupe alkyle, cycloalkyle, aryle, alkylaryle, arylalkyle, deux restes $R^1$ en ortho l'un par rapport à l'autre pouvant s'unir en un noyau aromatique ou hétérocyclique et l'un des restes $R^1$ étant toujours différent d'un atome d'hydrogène et

b) de 0 à 5 moles %, par rapport à la somme des composants a) et b), d'un hydrocarbure aromatique tri- ou tétra-halogéné de formule

$$ArX_n \qquad (III),$$

dans laquelle

Ar est un reste aromatique ou hétérocyclique,

X est le chlore ou le brome et

n représente le nombre 3 ou 4 et

c) de sulfures alcalins, éventuellement en association avec des hydroxydes alcalins, le rapport molaire (a + b) : c étant compris dans l'intervalle de 0,85 : 1 à 1,15 : 1 et

d) d'un solvant organique, en utilisant conjointement, le cas échéant, des catalyseurs et/ou des co-solvants, le rapport molaire des sulfures alcalins c) au solvant organique d) se situant dans l'intervalle de 1 : 2 à 1 : 15, caractérisé en ce que tous les ingrédients anhydres sont introduits préalablement et chauffés à 150°C au moins et des substances contenant de l'eau sont chargées sous la forme d'une solution ou d'une masse fondue ou comme matière solide de manière que l'eau soit chassée du mélange réactionnel par distillation, et la réaction est ensuite conduite à des températures de 210 à 270°C, éventuellement sous légère surpression.

2. Procédé suivant la revendication 1, caractérisé en ce que l'élimination de l'eau est effectuée à des températures de 165 à 205°C.

3. Procédé suivant la revendication 1, caractérisé en ce qu'on utilise le N-méthyl-ω-caprolactame comme solvant organique polaire.

4. Procédé suivant la revendication 1, caractérisé en ce qu'on utilise des carboxylates alcalins comme catalyseurs.

5. Procédé suivant la revendication 1, caractérisé en ce qu'on utilise comme co-solvants, des N,N-dialkylamides d'acides carboxyliques aliphatiques en $C_1$ à $C_8$ et aromatiques en $C_6$ à $C_{12}$ en une quantité de 0,02 à 1,0 mole par mole de sulfure alcalin.

6. Procédé suivant la revendication 1, caractérisé en ce qu'on utilise le 1,4-dichlorobenzène comme hydrocarbure aromatique dihalogéné de formule (I).

7. Procédé suivant la revendication 1, pour la production de polysulfures d'arylènes ramifiés, caractérisé en ce qu'on utilise le 1,2,4-trichlorobenzène comme hydrocarbure aromatique polyhalogéné de formule (III).